Europäisches Patentamt

European Patent Office

Office européen des brevets

(11) Veröffentlichungsnummer : **0 106 918
B1**

(12) **EUROPÄISCHE PATENTSCHRIFT**

(45) Veröffentlichungstag der Patentschrift :
07.05.86

(51) Int. Cl.⁴ : **G 03 F   3/08**

(21) Anmeldenummer : **82112002.9**

(22) Anmeldetag : **24.12.82**

(54) **Verfahren und Einrichtung zur Herstellung von Farbauszügen für den Einzelfarbendruck.**

(30) Priorität : **22.10.82 EP 82109759**

(43) Veröffentlichungstag der Anmeldung :
**02.05.84 Patentblatt 84/18**

(45) Bekanntmachung des Hinweises , auf die Patenterteilung : **07.05.86 Patentblatt 86/19**

(84) Benannte Vertragsstaaten :
**AT BE CH DE FR GB IT LI NL SE**

(56) Entgegenhaltungen :
**DE-A- 2 853 511
US-A- 3 555 262**

(73) Patentinhaber : **DR.-ING. RUDOLF HELL GmbH
Grenzstrasse 1-5
D-2300 Kiel 14 (DE)**

(72) Erfinder : **Knop, Hans-Georg
Stückenberg 15
D-2305 Heikendorf (DE)**
Erfinder : **Nowak, Michael
Felsenstrasse 21
D-2300 Kiel (DE)**
Erfinder : **Redecker, Friedrich
Hohrott 23
D-2305 Heikendorf (DE)**
Erfinder : **Tiede, Ralf
Seebrooksberg 5
D-2300 Klausdorf (DE)**

EP 0 106 918 B1

**Beschreibung**

Die Erfindung bezieht sich auf das Gebiet der elektronischen Reproduktionstechnik für den Einzelfarbendruck und betrifft insbesondere ein Verfahren und eine Einrichtung zur Herstellung von Farbauszügen. Unter Einzelfarbendruck wird z. B. der Textil-, Dekor- oder Verpackungsdruck verstanden.

Während der Farbauftrag auf das Druckmedium beim Mehrfarben-Mischdruck durch Übereinanderdrucken unterschiedlicher Anteile der Druckfarben « Gelb », « Magenta », « Cyan » und « Schwarz » erfolgt, wird beim Einzelfarbendruck jede zu druckende Farbe vor dem Druckprozeß ermischt und dann getrennt auf das Druckmedium übertragen, so daß für jede Farbe einer Mustervorlage ein entsprechender Farbauszug hergestellt werden muß.

Eine solche Mustervorlage weist beispielsweise Farbtöne mit einer verlaufenden Farbverteilung, d. h. mit einer unterschiedlichen Farbsättigung und/oder Helligkeit innerhalb der einzelnen Farbtöne, auf. In diesem Falle müssen die Farbauszüge sowohl eine Aussage über die örtliche Verteilung der Einzelfarben als auch eine Aussage über den Farbverlauf, d. h. über die örtlich unterschiedliche Stärke des Farbauftrages liefern.

Aus der DE-B-28 53 511 ist bereits eine Einrichtung zur Herstellung von Farbauszügen für den Einzelfarbendruck bekannt. Durch punkt- und zeilenweise optoelektronische Abtastung einer Mustervorlage werden drei primäre Farbmeßwertsignale gewonnen, welche die Farbanteile Rot, Grün und Blau der abgetasteten Bildpunkte repräsentíeren. In einem Verlaufssignal-Geber werden aus den Farbmeßwertsignalen ein Helligkeitssignal oder im Falle, daß es sich bei dem Verlaufssignal-Geber um einen üblichen Farbrechner für den Mehrfarben-Mischdruck handelt, Farbauszugssignale gewonnen. Als Aufzeichnungssignal für einen Farbauszug wird entweder das Helligkeitssignal oder ein vor der Aufzeichnung ausgewähltes Farbauszugssignal verwendet. Eine mit den Farbmeßwertsignalen beaufschlagte Farberkennungs-Schaltung wird auf die Erkennung der einzelnen Vorlagenfarben in der Mustervorlage voreingestellt. Die Farberkennungs-Schaltung liefert entsprechende Farberkennungssignale, wenn die voreingestellten Vorlagenfarben bei der Abtastung der Mustervorlage erkannt werden. Während der Aufzeichnung des Farbauszuges einer ausgewählten Vorlagenfarbe wird das ausgewählte Aufzeichnungssignal in Abhängigkeit des Farberkennungssignals der betreffenden Vorlagenfarbe immer dann zu einer Schreiblampe des Aufzeichnungsorgan S durchgeschaltet, wenn die ausgewählte Vorlagenfarbe in der Mustervorlage erkannt wird.

Die Schreiblampe, durch das Aufzeichnungssignal in der Helligkeit moduliert, belichtet punkt- und zeilenweise ein Aufzeichnungsmedium, z. B. einen Film, welcher nach der Entwicklung den gewünschten Farbauszug darstellt.

Bei diesem Verfahren erscheinen die einzelnen Farbton-Verteilungen in den zugehörigen Farbauszügen scharf umrissen, so daß die Einzelfarben beim späteren Druck exakt nebeneinander gedruckt werden. Dies kann je nach Art der Mustervorlagen vorteilhaft sein, aber gelegentlich auch zu störenden Abrissen des Farbverlaufs im Druck führen.

Der in den Ansprüchen 1 und 8 angegebenen Erfindung liegt daher die Aufgabe zugrunde, ein Verfahren und eine Einrichtung zur Herstellung von Farbauszügen für den Einzelfarbendruck anzugeben, mit denen im Farbauszug insbesondere die Wiedergabe von Farbverläufen verbessert wird.

Vorteilhafte Weiterbildungen sind in den Unteransprüchen angegeben.

Die Erfindung wird im folgenden anhand einer Figur näher erläutert.

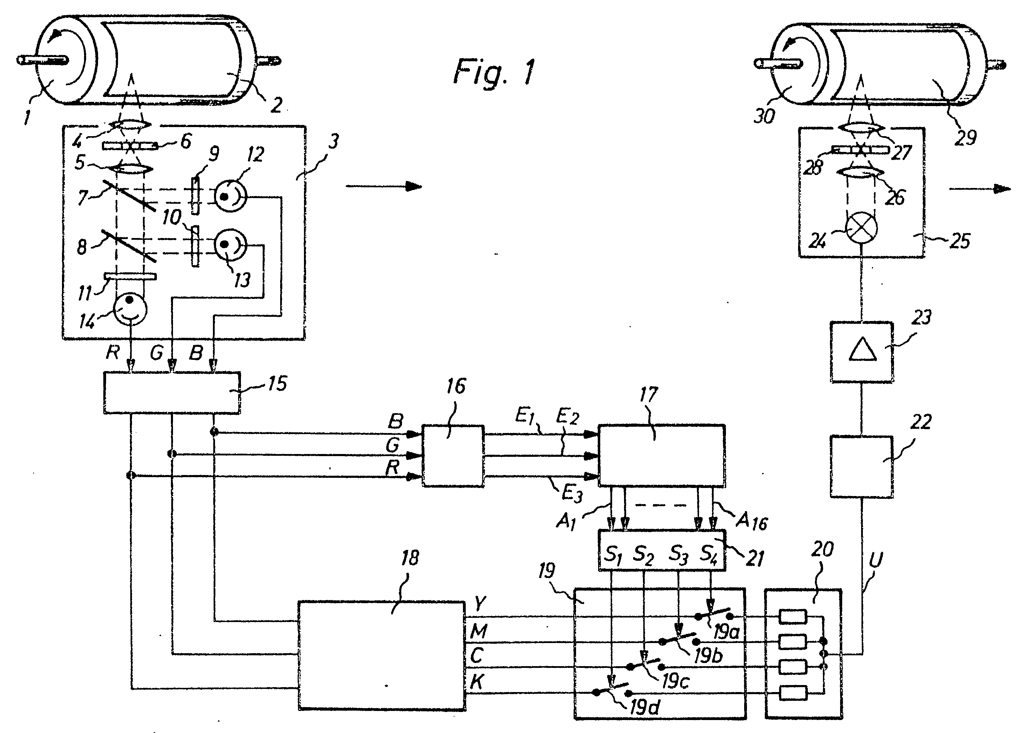

Die Figur zeigt eine Einrichtung zur Herstellung von Farbauszügen für den Einzelfarbendruck, beispielsweise für den Textil-, Dekor-, Porzellan- oder Verpackungsdruck.

Auf einer rotierenden Abtasttrommel 1 ist eine Mustervorlage 2 aufgespannt, die von einem Abtastorgan 3 punkt- und zeilenweise abgetastet wird. Das von der Mustervorlage 2 kommende Abtastlicht gelangt über Objektive 4 und 5 und eine Blende 6 in das Abtastorgan 3 und wird dort mittels teildurchlässiger Spiegel 7 und 8 in drei Teilstrahlen zerlegt.

Die Teilstrahlen fallen durch Farbfilter 9, 10 und 11 auf drei optoelektronische Wandler 12, 13 und 14, welche das empfangene Abtastlicht in drei primäre Farbmeßwertsignale R, G und B als Maß für die Farbanteile Rot, Grün und Blau der abgetasteten Bildpunkte umwandeln.

Die Farbmeßwertsignale R, G und B werden gegebenenfalls in einer Logarithmier-Stufe 15 logarithmiert oder teillogarithmiert und einer Umformer-Stufe 16, z. B. in Form einer Farbraumtransformations-Stufe, zugeführt und dort in die Farbsignale $E_1$, $E_2$ und $E_3$ umgesetzt, welche die Farbraumkoordinaten der abgetasteten Farben darstellen.

Zur Unterscheidung der in der Mustervorlage 2 vorkommenden Farben oder Farbtöne, nachfolgend Vorlagenfarben genannt, ist eine Farberkennungs-Schaltung 17 vorhanden, in der vor Abtastung der Mustervorlage 2 innerhalb des Farbraumes Farberkennungsräume für die einzelnen zu unterscheidenden Vorlagenfarben abgegrenzt werden, wobei die einzelnen Farberkennungsräume möglichst gut an die Farbbereiche der zu trennenden Vorlagenfarben angepaßt sein müssen, um eine exakte Farbtrennung zu erreichen. Während der Abtastung der Mustervorlage 2 prüft die Farberkennungs-Schaltung 17, welchen abgegrenzten Farberkennungsräumen die Farbsignale $E_1$, $E_2$ und $E_3$ zuzuordnen sind und gibt entsprechende Farberkennungssignale A für die einzelnen Vorlagenfarben aus. Die Farberkennungs-Schaltung 17 möge z. B. zur Unterscheidung von sechzehn Vorlagenfarben ausgelegt sein. Sie erzeugt dann sechzehn Farberkennungssignale $A_1$ bis $A_{16}$, von denen jeweils nur eines zur selben Zeit auftritt. Beispielsweise erscheint das Farberkennungssignal $A_1$ beim Erkennen der Vorlagenfarbe « Weiß », das Farberkennungssignal $A_3$ beim Erkennen der Vorlagenfarbe « rötliches Gelb » und das Farberkennungssignal $A_5$ beim Erkennen der Vorlagenfarbe « gelbliches Grün ».

Die Farberkennungs-Schaltung 17 kann nach der DE-B-25 44 703 oder nach der DE-B-26 28 053 aufgebaut sein. In diesem Falle werden die Farberkennungsräume durch elektronisch erzeugte Schwellensignale für die Farbsignale $E_1$, $E_2$ und $E_3$ abgegrenzt. Alternativ kann die Farberkennungs-Schaltung 17 nach der DE-A-29 23 468 bzw. der DE-A-29 23 473 oder der DE-A-29-23 477 ausgestaltet sein. In diesem Falle werden die Farberkennungsräume durch Eingabe von Farbnummern in einen Farberkennungs-Speicher aufgebaut, welcher bei der Farberkennung durch die Farbsignale $E_1$, $E_2$ und $E_3$ adressiert wird, wobei die Farbidentifizierung durch Ausgabe der entsprechenden Farbnummern erfolgt.

Die von der Logarithmier-Stufe 15 kommenden Farbmeßwertsignale R, G und B werden gleichzeitig einer Korrektur-Schaltung 18 für Farb- und/oder Tonwertkorrekturen zugeführt, in der die Farbmeßwertsignale R, G und B nach den Gesetzmäßigkeiten der subtraktiven Farbmischung in die Farbauszugssignale « Gelb » (Y), « Magenta » (M), « Cyan » (C) und « Schwarz » (K) umgerechnet, modifiziert und gegebenenfalls auch noch gemischt werden. Die Korrektur-Schaltung 18 kann z. B. ein Farbrechner für den Mehrfarben-Mischdruck sein.

Die von der Korrektur-Schaltung 18 kommenden Farbauszugssignale Y, M, C und K werden in einer Mehrfach-Schaltstufe 19 in Abhängigkeit von Steuersignalen $S_1$ bis $S_4$ zur Aufzeichnung durchgeschaltet und zunächst einer Verknüpfungs-Stufe 20 zugeführt, in der die durchgeschalteten Farbauszugssignale Y, M, C und K gegebenenfalls noch unterschiedlich gewichtet werden können.

Im Ausführungsbeispiel sind die einzelnen Schalter 19a bis 19d der Mehrfach-Schaltstufe 19 durch mechanische Schalter symbolisiert, welche durch die Steuersignale $S_1$ bis $S_4$ betätigbar sind. Vorzugsweise ist die Mehrfach-Schaltstufe 19 ein Analogmultiplexer. Die Mehrfach-Schaltstufe 19 kann aber auch aus Multiplizierern bestehen, in denen Steuersignale und Farbauszugssignale multiplikativ verknüpft werden.

In einer mit der Mehrfach-Schaltstufe 19 und der Farberkennungs-Schaltung 17 verbundenen Zuordnungs-Stufe 21 kann jedem Steuersignals $S_1$ bzw. $S_2$, $S_3$ und $S_4$ das Farberkennungssignal $A_1$ bis $A_{16}$ mindestens einer Vorlagenfarbe frei wählbar zugeordnet werden, so daß die Farbauszugssignale Y bzw. M, C und K immer dann als Aufzeichnungssignal U durchgeschaltet werden, wenn die zugeordneten Vorlagenfarben bei der Abtastung der Mustervorlage 2 erkannt werden, wodurch gegenüber der herkömmlichen Technik an der Aufzeichnung eines Farbauszugs mindestens zwei Farbauszugssignale bzw. mindestens zwei Vorlagenfarben beteiligt sind. Die jeweils durchgeschalteten Farbauszugssignale Y bzw. M, C und K gelangen über die Verknüpfungs-Stufe 20, eine Filmlinearisierungs-Stufe 22 und einen Endverstärker 23 auf die Schreiblampe 24 eines Aufzeichnungsorgans 25. Die Schreiblampe 24, durch das Aufzeichnungssignal U in der Helligkeit moduliert, belichtet mit Hilfe von Objektiven 26 und 27 sowie einer Schreibblende 28 punkt- und zeilenweise ein Aufzeichnungsmedium 29, z. B. einen Film, das auf einer synchron mit der Abtasttrommel 1 rotierenden Aufzeichnungstrommel 30 montiert ist. Der belichtete und entwickelte Film ist einer der gewünschten Farbauszüge bzw. bereits die Druckform für den Einzelfarbendruck. Die Erfindung ist nicht auf die Herstellung von Farbauszügen bzw. von Druckformen durch Film-Belichtung beschränkt, beispielsweise können auch Druckform-Graviergeräte verwendet werden.

Die Reproduktions-Einrichtung, insbesondere hinsichtlich der möglichen Zuordnungen von Farberkennungssignalen A und Farbauszugssignalen Y bzw. M, C und K bzw. Steuersignalen S in der Zuordnungs-Stufe 21, wird anhand einer vorteilhaften Vorgehensweise erläutert.

Zunächst wird diejenige Vorlagenfarbe (Auszugsfarbe), deren Druckdichte im Farbauszug jeweils mit dem vollen Betrag aufgezeichnet werden soll, und eines der Farbauszugssignale Y bzw. M, C und K (Hauptsignal), z. B. dasjenige, welches den Farbverlauf der Auszugsfarbe am besten wiedergibt, ausgewählt und dem Steuersignal S für das betreffende Hauptsignal das Farberkennungssignal A der ausgewählten Auszugsfarbe zugeordnet. In vorteilhafter Weise wird das betreffende Hauptsignal zusätzlich von der Vorlagenfarbe « Weiß » gesteuert, indem dem Steuersignal S des Hauptsignals auch noch das Farberkennungssignal A für die Vorlagenfarbe « Weiß » zugeordnet wird.

Wenn beispielsweise der Farbauszug für die Auszugsfarbe « rötliches Gelb » aufgezeichnet werden soll, wird man das Farberkennungssignal $A_3$ für die Auszugsfarbe « rötliches Gelb » und das Farberkennungssignal $A_1$ für die Vorlagenfarbe « Weiß » dem Steuersignal $S_4$ für den Schalter 19a zuordnen, da das Farbauszugssignal Y den Farbverlauf für « rötliches Gelb » am besten wiedergibt.

Dann werden diejenigen Vorlagenfarben (Nebenfarben) ausgewählt, die im momentan aufzuzeichnenden Farbauszug mit verringerter Druckdichte erscheinen sollen und deren Farbauszugssignale Y bzw. M, C und K in der Korrektur-Schaltung 18 bezüglich Anfangs- und Enddichte, Gradation sowie Grund und Selektiv-Farbkorrektur so korrigiert, daß sie im aufzuzeichnenden Farbauszug hinsichtlich der Farbtrennung und des Farbverlaufes ein optimales Ergebnis liefern. Abschließend werden dann den Farberkennungssignalen A der ausgewählten Nebenfarben die Steuersignale S der betreffenden Farbauszugssignale Y bzw. M, C und K zugeordnet, wodurch festgelegt wird, welche Nebenfarben zusätzlich neben der Auszugsfarbe in zweckmäßiger Weise an der Aufzeichnung des Farbauszugs beteiligt werden. ·

Wenn beispielsweise Farbabrisse zwischen der Auszugsfarbe « rötliches Gelb » und der Vorlagenfarbe « gelbliches Grün » zu erwarten sind, wird « gelbliches Grün » als Nebenfarbe definiert und das entsprechende Farberkennungssignal $A_5$ für « gelbliches Grün » dem Steuersignal $S_2$ für den Schalter 19c zugeordnet, da der Farbverlauf für « gelbliches Grün » am besten durch das Farbauszugssignal C wiedergegeben wird.

Bei der Aufzeichnung des Farbauszugs « rötliches Gelb » wird nun das Farbauszugssignal Y mittels des Schalters 19a jeweils bei Auftreten der Auszugsfarbe « rötliches Gelb » sowie der Vorlagenfarbe « Weib » und alternativ das Farbauszugssignal C mittels des Schalters 19c bei Auftreten der Nebenfarbe « gelbliches Grün » durchgeschaltet und an der Aufzeichnung des Farbauszugs « rötliches Gelb » beteiligt. Dadurch wird in vorteilhafter Weise der Farbverlauf oder der Farbübergang an Farbbereichsgrenzen derart verbessert, daß die Farbbereichsgrenzen in einem Farbauszug nicht mehr scharf, sondern überlappend aufgezeichnet werden. Durch die Überlappung entsteht eine Zone des Mischdrucks, in der beim Einzelfarbendruck die ermischten Farben nicht mehr nebeneinander, sondern übereinander gedruckt werden, wodurch störende Farbabrisse vermieden werden. Zusätzlich wird durch die selektive Korrektur der Nebenfarben eine bessere Farbtrennung in den Farbauszügen erreicht.

Bei der beschriebenen Vorgehensweise wird jedem Farbauszugssignal Y bzw. M, C oder K eine andere Vorlagenfarbe bzw. ein anderes Farberkennungssignal A zugeordnet. Da, wie zuvor erwähnt, in jedem Zeitpunkt immer nur ein Farberkennungssignal A auftritt, wird bei dem beschriebenen Beispiel das Aufzeichnungssignal U auch nur immer aus dem momentan durchgeschalteten Farbauszugssignal Y bzw. M, C, K gebildet. Die Zuordnungen von Farbauszugssignalen Y bzw. M, C, K und Farberkennungssignalen sind aber nicht auf die beschriebene Vorgehensweise beschränkt, sondern frei wählbar. So kann es gelegentlich von Vorteil sein, wie für die Vorlagenfarbe « Weiß » erläutert, einem Farbauszugssignal Y bzw. M, C, K die Farberkennungssignale A mehrerer Vorlagenfarben oder aber dem Farberkennungssignal A einer Vorlagenfarbe gleichzeitig mehrere Farbauszugssignale Y bzw. M, C, K zuzuordnen. Im letzteren Fall wird das Aufzeichnungssignal U nicht aus jeweils einem der Farbauszugssignale Y bzw. M, C, K, sondern durch eine Addition, insbesondere durch eine gewichtete Addition von Farbauszugssignalen Y bzw. M, C, K gebildet.

Dann arbeitet die Verknüpfungs-Stufe 20 als Addierer für die gewichteten Farbauszugssignale Y bzw. M, C, K. Ebenso wäre es denkbar, das Aufzeichnungssignal U durch Mischung der Farbauszugssignale Y bzw. M, C, K mittels eines durch die Farberkennungssignale A gesteuerten Balancereglers zu bilden. Die Mehrfach-Schaltstufe 19 besteht dann aus Multiplizierern, denen die Farbauszugssignale Y bzw. M, C, K und die Farberkennungssignale A zugeführt werden. In diesem Fall muß die Farberkennungs-Schaltung 17 analoge Farberkennungssignale A erzeugen, die ihre Maximalwerte jeweils bei den voreingestellten Schwerpunktfarben innerhalb der Farberkennungsräume haben und an den Grenzen der Farberkennungsräume zu Null werden. Eine solche Farberkennungs-Schaltung wird z. B. in der DE-B-26 28 053 beschrieben.

## Patentansprüche

1. Verfahren zur Herstellung von Farbauszügen, insbesondere für den Einzelfarbendruck, bei dem

a) eine farbige Mustervorlage (2) zur Gewinnung von Farbsignalen (R, G, B) mittels eines optoelektronischen Abtastorgans (3) punkt- und zeilenweise trichromatisch abgetastet wird,

b) aus den Farbsignalen (R, G, B) Farberkennungssignale (A) für die einzelnen Vorlagenfarben der Mustervorlage (2) und durch eine Farb- und/oder Tonwertkorrektur Farbauszugssignale (Y, M, C, K) erzeugt werden,

c) ein Farbauszugssignal (Y, M, C, K) durch das Farberkennungssignal (A) einer als Auszugsfarbe ausgewählten Vorlagenfarbe gesteuert wird,

d) ein Aufzeichnungssignal (U) für ein Aufzeichnungsorgan (25) erzeugt wird, und bei dem

e) der Farbauszug der Auszugsfarbe punkt- und zeilenweise aufgezeichnet wird, dadurch gekennzeichnet, daß

f) zur Aufzeichnung des Farbauszugs der Auszugsfarbe mindestens eine weitere Vorlagenfarbe ausgewählt wird,

g) die Farbauszugssignale (Y, M, C, K) auf die ausgewählten Vorlagenfarben begrenzt selektiv korrigiert werden,

h) mindestens ein ausgewähltes selektiv korrigiertes Farbauszugssignal durch das Farberkennungssignal (A) der weiteren Vorlagenfarbe gesteuert wird und

i) das Aufzeichnungssignal (U) aus den durch das Farberkennungssignal (A) der Auszugsfarbe gesteuerten und durch das Farberkennungssignal (A) der mindestens einen weiteren Vorlagenfarbe gesteuerten selektiv korrigierten Farbauszugssignalen gebildet wird.

2. Verfahren nach Anspruch 1, dadurch gekennzeichnet, daß die Farberkennungssignale (A) der ausgewählten Vorlagenfarben die selektiv korrigierten Farbauszugssignale beim Erkennen der ausgewählten Vorlagenfarben in der Mustervorlage (2) als Aufzeichnungssignal (U) zum Aufzeichnungsorgan (25) durchschalten.

3. Verfahren nach Anspruch 1 oder 2, dadurch gekennzeichnet, daß

   a) als Auszugsfarbe für einen Farbauszug diejenige Vorlagenfarbe ausgewählt wird, welche in dem betreffenden Farbauszug mit dem vollen Dichtewert aufgezeichnet werden soll, und

   b) das Farberkennungssignal (A) der Auszugsfarbe dasjenige selektiv korrigierte Farbauszugssignal steuert, welches den Farbverlauf der Auszugsfarbe am besten wiedergibt.

4. Verfahren nach Anspruch 3, dadurch gekennzeichnet, daß das selektiv korrigierte Farbauszugssignal, welches den Farbverlauf der Auszugsfarbe am besten wiedergibt, zusätzlich durch das Farberkennungssignal (A) der Vorlagenfarbe « Weiß » gesteuert wird.

5. Verfahren nach einem der Ansprüche 1 bis 4, dadurch gekennzeichnet, daß als weitere Vorlagenfarben (Nebenfarben) für einen Farbauszug diejenigen Vorlagenfarben der Mustervorlage (2) ausgewählt werden, welche im Farbauszug nicht mit dem vollen Dichtewert aufgezeichnet werden sollen.

6. Verfahren nach einem der Ansprüche 1 bis 5, dadurch gekennzeichnet, daß

   a) das Farberkennungssignal (A) einer ausgewählten Vorlagenfarbe gleichzeitig mindestens zwei der selektiv korrigierten Farbauszugssignale steuert und

   b) das Aufzeichnungssignal (U) durch Addition der gesteuerten selektiv korrigierten Farbauszugssignale gebildet wird.

7. Verfahren nach Anspruch 6, dadurch gekennzeichnet, daß das Aufzeichnungssignal (U) durch eine gewichtete Addition der gesteuerten, selektiv korrigierten Farbauszugssignale gebildet wird.

8. Einrichtung zur Herstellung von Farbauszügen, insbesondere für den Einzelfarbendruck, bestehend aus

   a) einem optoelektronischen Abtastorgan (3) zur Gewinnung von Farbsignalen (R, G, B) durch punkt- und zeilenweise, trichromatische Abtastung eine Mustervorlage (2),

   b) einer Farberkennungs-Schaltung (17, 21), welche an das Abtastorgan (3) angeschlossen ist, zur Erzeugung von Farberkennungssignalen (A) für die Vorlagenfarben der Mustervorlage (2),

   c) einer Korrektur-Schaltung (18), welche mit dem Abtastorgan (3) verbunden ist, zur Erzeugung von Farbauszugssignalen (Y, M, C, K) aus den Farbsignalen (R, G, B) durch eine Farb- und/oder Tonwertkorrektur,

   d) einer Steuerstufe (19a) im Signalweg eines Farbauszugssignals (Y, M, C, K), welche mit einem Ausgang der Korrektur-Schaltung (18) und einem Ausgang der Farberkennungs-Schaltung (17, 21) in Verbindung steht, zur Steuerung des Farbauszugssignals in Abhängigkeit des Farberkennungssignals (A) einer als Auszugsfarbe ausgewählten Vorlagenfarbe, und

   e) einem durch ein Aufzeichnungssignal (U) gesteuerten Aufzeichnungsorgan (25) zur punkt- und zeilenweisen Aufzeichnung eines Farbauszuges, gekennzeichnet durch

   f) Mittel zur selektiven Korrektur der Farbauszugssignale in der Korrektur-Schaltung (18),

   g) weitere Steuerstufen (19b, 19c, 19d) in den Signalwegen der selektiv korrigierten Farbauszugssignale, welche an die weiteren Ausgänge der Korrektur-Schaltung (18) und an die weiteren Ausgänge der Farberkennungs-Schaltung (17, 21) angeschlossen sind, zur Steuerung mindestens eines weiteren selektiv korrigierten Farbauszugssignals in Abhängigkeit des Farberkenungssignals (A) mindestens einer weiteren Vorlagenfarbe, und

   h) eine Verknüpfungs-Stufe (20), welche an die Ausgänge der Steuerstufen (19a, 19b, 19c, 19d) und an den Eingang des Aufzeichnungsorgans (25) angeschlossen ist, zur Bildung des Aufzeichnungssignals (U) aus den gesteuerten, selektiv korrigierten Farbauszugssignalen.

9. Einrichtung an Anspruch 8, dadurch gekennzeichnet, daß die Steuerstufen (19a, 19b, 19c, 19d) als Schalter ausgebildet sind.

10. Einrichtung nach Anspruch 8, dadurch gekennzeichnet, daß die Steuerstufen (19a, 19b, 19c, 19d) als Mutliplizierer ausgebildet sind.

11. Einrichtung nach einem der Ansprüche 8 bis 10, dadurch gekennzeichnet, daß die Verknüpfungs-Stufe (20) als Addierer für eine gewichtete Addition der gesteuerten, selektiv korrigierten Farbauszugssignale ausgebildet ist.

**Claims**

1. Method of producing colour separations, in particular for single colour printing, in which

   a) a coloured pattern original (2) is scanned trichromatically dot by dot and line by line by means of an opto-electronic scanner unit (3) to obtain colour signals (R, G, B),

   b) colour recognition signals (A) are produced from the colour signals (R, G, B) for the separate original colours of the pattern original (2) and colour separation signals (Y, M, C, K) are produced by means of a colour and/or tonal value correction,

   c) a colour separation signal (Y, M, C, K) is controlled by means of the colour recognition signal (A) of an orignal colour selected as a separation colour,

   d) a recording signal (U) for a recording unit (25) is generated, and in which

   e) the colour separation of the separation colour is recorded dot by dot and line by line, characterized in that

   f) at least one other original colour is selected for recording the colour separation of the separation colour,

   g) the colour separation signals (Y, M, C, K) are corrected selectively under limitation to the original colours selected,

   h) at least one selected and selectively corrected colour separation signal is controlled by means of the colour recognition signal (A) of the other original colour, and

   i) the recording signal (U) is formed from the selectively corrected colour separation signals controlled by means of the colour recognition signal (A) of the separation colour and controlled by the colour recognition signal (A) of the at least one other original colour.

2. Method according to claim 1, characterized in that the colour recognition signals (A) of the original colours selected authorize the onward transmission of the selectively corrected colour separation signals upon recognition of the selected original colours in the pattern original (2), as the recording signal (U), to the recording unit (25).

3. Method according to claim 1 or 2, characterized in that

a) the original colour which is to be recorded in the colour separation in question with its full density value is that which is selected as a separation colour for a colour separation, and

b) the colour recognition signal (A) of the separation colour controls the selectively corrected colour separation signal which best reproduces the colour graduation of the separation colour.

4. Method according to claim 3, characterized in that the selectively corrected colour separation signal which best reproduces the colour graduation of the separation colour is complementarily controlled by the colour recognition signal (A) of the original colour « white ».

5. Method according to one of the claims 1 to 4, characterized in that the original colours of the pattern original (2) which are not to be recorded with full density value in the colour separation are those selected as the other original colours (secondary colours) for a colour separation.

6. Method according to one of the claims 1 to 5, characterized in that

a) the colour recognition signal (A) of a selected original colour simultaneously controls at least two of the selectively corrected colour separation signals, and

b) the recording signal (U) is formed by addition of the controlled selectively correct colour separation signals.

7. Method according to claim 6, characterized in that the recording signal (U) is generated by a weighted addition of the controlled selectively corrected colour separation signals.

8. System for producing colour separations, in particular for single colour printing, comprising

a) an opto-electronic scanning unit (3) for obtaining colour signals (R, G, B) by dot by dot and line by line trichromatic scanning of a pattern original (2),

b) a colour recognition circuit (17, 21) which is connected to the scanner unit (3), for producing colour recognition signals (A) for the original colours of the pattern original (2),

c) a correction circuit (18) which is connected to the scanner unit (3), for producing colour separation signals (Y, M, C, K) from the colour signals (R, G, B) by means of a colour and/or tonal value correction,

d) a control stage (19a) in the signal path of a colour separation signal (Y, M, C, K) which is in communication with one output terminal of the correction circuit (18) and with one output terminal of the colour recognition circuit (17, 21), for controlling the colour separation signals as a function of the colour recognition signal (A) of an original colour selected as a separation colour, and

e) a recording unit (25) controlled by a recording signal (U) for dot by dot and line by line recording of a colour separation, characterized by

f) devices for selective correction of the colour separation signals in the correction circuit (18),

g) other control stages (19b, 19c, 19d) in the signal paths of the selectively corrected colour separation signals, which are connected to the other output terminals of the correction circuit (18) and to the other output terminals of the colour recognition circuit (17, 21), for controlling at least one other selectively corrected colour separation signal as a function of the colour recognition signal (A) of at least one other original colour, and

h) an interlinking stage (20) which is connected to the output terminals of the control stages (19a, 19b, 19c, 19d) and to the input terminal of the recording unit (25), for forming the recording signal (U) from the controlled selectively corrected colour separation signals.

9. System according to claim 8, characterized in that the control stages (19a, 19b, 19c, 19d) are constructed as switches.

10. System according to claim 8, characterized in that the control stages (19a, 19b, 19c, 19d) are constructed as multipliers.

11. System according to one of the claims 8 to 10, characterized in that the interlinking stage (20) is constructed as an adder for a weighted addition of the controlled selectively corrected colour separation signals.

## Revendications

1. Procédé pour réaliser des extraits de couleur notamment pour l'impression monochrome, selon lequel :

a) on détecte un modèle en couleur (2) pour obtenir des signaux de couleur (R, G, B) à l'aide d'un organe de détection (3) opto-électronique, de façon trichromatique, par point et par ligne.

b) à partir des signaux de couleur (R, G, B), on génère des signaux de reconnaissance de couleur (A) pour les différentes couleurs de modèles du modèle (2) et on forme des signaux d'extrait de couleur (Y, M, C, K) par une correction de couleur et/ou de valeur de teinte,

c) on commande un signal d'extrait de couleur (Y, M, C, K) par le signal de reconnaissance de couleur (A) d'une couleur de modèles choisie comme extrait de couleur,

d) on génère un signal d'inscription (U) pour un organe d'inscription (25) et,

e) par ce signal, on inscrit point par point et ligne par ligne l'extrait de couleur de la couleur d'extrait, caractérisé en ce que :

f) lors de l'inscription de l'extrait de couleur de la couleur d'extrait, on sélectionne au moins une autre couleur de modèle,

g) les signaux d'extrait de couleur (Y, M, C, K) sont corrigés de façon sélectivement limitée pour les couleurs de modèle choisies,

h) on commande au moins un signal d'extrait de couleur corrigé de façon sélective, choisi par le signal de reconnaissance de couleur (A) de l'autre couleur de modèle et

i) on forme le signal d'inscription (U) à partir des signaux d'extrait de couleur commandés par le signal de reconnaissance de couleur (A) de l'extrait de couleur et par le signal de reconnaissance de couleur (A) des signaux d'extrait de couleur corrigés de façon sélectivement commandée d'au moins une autre couleur de modèle.

2. Procédé selon la revendication 1, caractérisé en ce que les signaux de reconnaissance de couleur (A) des couleurs de modèle sélectionnées font passer comme signal d'inscription (U) vers l'organe d'inscription (25), les signaux d'extrait de couleur corrigés de façon sélective, lors de la reconnaissance des couleurs de modèle choisies dans le modèle (2).

3. Procédé selon la revendication 1 ou 2, caractérisé en ce que :

a) on choisit comme couleur d'extrait pour un extrait de couleur celle des couleurs de modèle qui doit être inscrite dans l'extrait de couleur concerné avec la valeur de densité totale, et

b) le signal de reconnaissance de couleur (A) de la couleur d'extrait commande le signal d'extrait de couleur corrigé de façon sélective qui restitue le mieux le profil de couleur de la couleur d'extrait.

4. Procédé selon la revendication 3, caractérisé en ce que le signal d'extrait de couleur corrigé de façon sélective, qui reproduit le mieux le profil de couleur de la couleur d'extrait est en outre commandé par le signal de reconnaissance de couleur (A) de la couleur de modèle « blanc ».

5. Procédé selon l'une des revendications 1 à 4, caractérisé en ce que comme autres couleurs des modèles (couleurs auxiliaires) pour un extrait de couleur, on sélectionne les couleurs de modèle du modèle (2) qui sont à inscrire dans l'extrait de couleur avec une valeur de densité non totale.

6. Procédé selon l'une des revendications 1 à 5, caractérisé en ce que :

a) le signal de reconnaissance de couleur (A) d'une couleur de modèle, choisie, commande simultanément au moins deux signaux d'extrait de couleur corrigés de façon sélective et,

b) le signal d'inscription (U) s'obtient par addition des signaux d'extrait de couleur corrigés de façon sélectivement commandée.

7. Procédé selon la revendication 6, caractérisé en ce que le signal d'inscription (U) est formé par une addition pondérée des signaux d'extrait de couleur, corrigés de façon sélective, commandés.

8. Installation pour obtenir des extraits de couleur notamment pour l'impression monochrome, comprenant :

a) l'organe de détection (3) opto-électronique pour fournir des signaux de couleur (R, G, B) par détection trichromatique point par point et ligne par ligne d'un modèle (2),

b) un circuit de reconnaissance de couleur (17, 21) qui est relié à l'organe de détection (3) pour former des signaux de reconnaissance de couleur (A) pour les couleurs de modèle du modèle (2),

c) un circuit de correction (18) relié à l'organe de détection (3) pour former des signaux d'extrait de couleur (Y, M, C, K) à partir des signaux de couleur (R, G, B) par une correction de couleur et/ou de valeur de teinte.

d) un étage de commande (19a) dans le chemin du signal d'un signal d'extrait de couleur (Y, M, C, K) qui est relié à une sortie du circuit de correction (18) et à une sortie du circuit de reconnaissance de couleur (17, 21) pour commander le signal d'extrait de couleur en fonction du signal de reconnaissance de couleur (A) d'une couleur de modèle sélectionnée comme couleur d'extrait et

e) un organe d'inscription (25) pour inscrire point par point et ligne par ligne un extrait de couleur, organe commandé par un signal d'inscription (U), caractérisé par :

f) un moyen pour corriger sélectivement le signal d'extrait de couleur dans le circuit de correction (18),

g) d'autres étages de commande (19b, 19c, 19d) dans les chemins de signaux des signaux d'extrait de couleur corrigés de façon sélective et qui sont reliés aux autres sorties du circuit de correction (18) et aux autres sorties du circuit de reconnaissance de couleur (17, 21) pour commander au moins un autre signal d'extrait de couleur corrigé de façon sélective en fonction du signal de reconnaissance de couleur (A) d'au moins une autre couleur de modèle, et

h) un étage de combinaison (20) qui est relié aux sorties des étages de commande (19a, 19b, 19c, 19d) et à l'entrée de l'organe d'inscription (25) pour former le signal d'inscription (U) à partir des signaux d'extrait de couleur corrigés de façon sélective, commandés.

9. Installation selon la revendication 8, caractérisée en ce que les étages de commande (19a, 19b, 19c, 19d) sont réalisés sous forme de commutateurs.

10. Installation selon la revendication 8, caractérisée en ce que les étages de commande (19a, 19b, 19c, 19d) sont réalisés sous la forme de multiplicateurs.

11. Installation selon l'une des revendications 8 à 10, caractérisée en ce que l'étage de combinaison (20) est formé comme additionneur pour une addition pondérée des signaux d'extrait de couleur corrigés de façon sélective, commandés.

Fig. 1